# EUROPEAN PATENT SPECIFICATION

(11) **EP 0 601 362 B1**
(45) Date of publication and mention of the grant of the patent: **21.01.1998**
(21) Application number: 93118665.4
(22) Date of filing: 19.11.1993
(51) Int. Cl.: C12C 12/04, C12C 11/06

(54) **Process for the production of non-alcoholic beer and device for effecting this process**
Verfahren und Vorrichtung zur Herstellung eines alkoholfreien Biers
Procédé pour la production d'une bière non alcoolisée et dispositif pour sa mise en oeuvre

(30) Priority: 25.11.1992 DE 4239605
(43) Date of publication of application: 15.06.1994
(73) Proprietor: Cultor Ltd., 00240 Helsinki (FI)
(72) Inventor: Back, Werner, Prof. Dr., D-85354 Freising (DE); Lommi, Heikki, SF-02460 Kantvik (FI); Swinkels, Wilhelmus Jacobus Petrus Maria, NL-5741 GC Beek en Donk (NL); Viljava, Timo Tapio, SF-02460 Kantvik (FI)
(74) Representative: Hansen, Bernd, Dr. Dipl.-Chem.

(56) References cited:
- EP-A- 0 424 794
- DE-A- 3 506 198
- CHEMIE MIKROBIOLOGIE TECHNOLOGIE DER LEBENSMITTEL vol. 14, no. 5/6 , September 1992 , GERMANY pages 157 - 161 U. SCHWANK ET AL. 'Absatzweise und kontinuierliche Milchsaüregärung mit immobilisiertem Lactobacillus Amylovorus.'
- BREWING & DISTILLING INTERNATIONAL. vol. 24, no. 9 , September 1993 , G.B. pages 76 - 77 B. STEVENS 'Bavaria's immobilized systems for making alcohol-free beer...'
- JOURNAL OF THE INSTITUTE OF BREWING vol. 97 , October 1991 , LONDON GB pages 375 - 380 J. KRONLOF & A. HAIKARA 'Contamination of immobilized yeast bioreactors.'
- JOURNAL OF THE INSTITUTE OF BREWING vol. 99 , June 1993 , LONDON GB page 209 H. PITTNER ET AL. 'Continuous production of acidifed wort for alcohol-free beer with immobilized lactic acid bacteria.'

## Description

The invention relates to a process for the production of non-alcoholic beer and a device for this.

The term "non-alcoholic beer" refers to different products in different countries. Thus, for example, in Spain, a product with an alcohol content of less than 1 vol.-% is viewed as non-alcoholic, while the limit in Holland for this is 0.5 vol.-%. In the Arabic States, the alcohol content of non-alcoholic beer may not exceed 0.05 vol.-%. In the USA and some other states, a drink with an alcohol content of less than 0.5 vol.-% may not be labelled as being beer. In terms of the invention, the term "non-alcoholic" is to be understood as implying that a beer is meant which has a greatly reduced alcohol content with respect to normal alcoholic beers.

A common way of producing non-alcoholic beer consists in removing the alcohol from normal alcohol-containing beer. However, the processes for this are very costly and the applied process steps such as distillation and the membrane separation technique also lead to the removal of aroma components and therefore to an often watery tasting final product.

A further manner of procedure for producing non-alcoholic beer uses the contacting of the wort with active yeast under specified conditions. This process is commonly effected in batch reactors and most recently also with continuously operating bioreactors which are packed with immobilized yeast (European patent application EP 0 424 794 A2). The process parameters, in particular the temperature in the bioreactor and the flow velocity through the bioreactor, are selected such that the alcohol formation is suppressed but that other metabolic reactions with yeasts can occur which lead to the formation of important flavour components and the reduction of off-flavours. The wort used for the process in this case is produced in the usual manner adapted for preparing non-alcoholic beer.

In comparison to normal alcoholic beers, non-alcoholic beer is more sensitive to microbiological spoiling during the production process and also during storage. In order to avoid this risk, the pH-value is usually already reduced in the wort, so that the stability of the product is increased. The simplest manner of doing this consists of adding an acid to the wort, lactic acid being preferred for reasons of flavour. Legal regulations in certain countries forbid the addition of acid in the process for beer production if the acid is not formed on a natural basis by fermentation during the process. In this case, one often then proceeds by adding lactic acid forming bacteria to wort in a batch fermentor, and the wort treated in this manner is mixed in specified ratios with the wort of which the pH-value is to be adjusted. However, the process carried out according to a batch operation for acidifying the wort includes the disadvantage that the growth and activity of the lactic acid producing bacteria can only be controlled with difficulty so that the quantity of produced lactic acid and, therefore, the pH-value of the treated wort cannot be precisely adjusted. Furthermore, the speed of the lactic acid production in the batch reactor is relatively slow so that, especially in big breweries where many brews are made each day, a large biomass must be applied in order to produce enough lactic acid and to obtain the suitable pH-value. On the whole, acidification according to the above mentioned batch operation process is very time consuming and often requires very large facilities.

The immobilization of various lactic acid producing bacteria is known in the state of the art, the immobilization being effected by means of various techniques for trapping or encapsulating the bacteria in carrier materials, as described, for example, in "Enzymes and Immobilized Cells in Biotechnology", Benjamin/Cummings Publishing Compl., Inc., 1985, published by Allan I. Leskin. However, these techniques have considerable disadvantages so that a transformation to the industrial scale has not been satisfactory up to now. The applied carrier materials, for example alginate pearls, are comparatively soft and cause unnecessary high pressure drops in packed bed reactors when high flow velocities or large units are used. Furthermore, in the known processes according to the state of the art, the immobilization is not carried out in the bioreactor itself, but in a separate facility when the carrier particles are brought together with the bacteria. Finally, the carrier material cannot be reused when the system is contaminated or interrupted for other reasons. The above described disadvantages led to the fact that the application of immobilized lactic acid producing bacteria for acidification in large scale beer production was not viewed as promising success.

It is an object of the present invention to provide a process according to which the immobilized lactic acid producing bacteria for acidification of wort can be applied and the above-mentioned disadvantages simultaneously avoided. A further object consists in providing a corresponding apparatus for effecting such a process.

The above first-mentioned object is solved by a process for the production of non-alcoholic beer, in which the pH-value of the wort is adjusted with lactic acid producing bacteria, which is characterized in that
a) a wort which is free or substantially free from hops or hops extract is allowed to flow through a bioreactor which contains immobilized lactic acid producing bacteria on the surfaces of a substantially non-compressible carrier which consists of a continuous, porous matrix or of dimpled or reticular, porous particles, the matrix or the particles having a structure which is formed by a loosely associated plurality of microparticles or microfibres which are chemically, adhesively or mechanically interconnected at least at some contact points between the individual microparticles or microfibres, the microparticles or microfibres being composed of a material, in particular a resin, with anion exchanger properties;
b) the acidified wort obtained from the bioreactor is allowed to reside in a post-treatment container;
c) the acidified wort from the post-treatment container treated in this manner is mixed with non-acidified wort to be adjusted to a specified pH-value; and
d) the mixture is then further processed into non-alcoholic beer in a known manner.

The wort used in step a) contains no or substantially no hops or hops extract since the lactic acid producing bacteria are predominantly sensitive with respect to substances contained in the hops and are killed off.

Preferably, the wort used in step a) is pretreated in such a way that it is freed of insoluble components and preferably boiled and/or stripped with nitrogen, carbon dioxide or steam bubbles and/or clarified. The boiling is usually carried out at a temperature of 100-105°C, whereas the stripping generally occurs at 99-102°C. The boiling or stripping steps are especially performed in order to eliminate impurities of DMS and/or DMSO. The clarification is performed at a preferred temperature of 70 to 80°C, wherein a temperature of 75°C is especially preferred.

The wort is preferably adapted to a temperature of 47 to 52°C before it is placed in the bioreactor. Particularly preferred, the wort is adapted to 48°C.

After adapting the temperature and before introducing the wort in the bioreactor, carbon dioxide may be percolated through the wort or directly added to the wort stream, preferably up to the saturation of the wort. Thereby a carbon source is introduced in the wort being useful for metabolic activities. Furthermore, the pH-value is lowered.

According to a preferred embodiment, the wort is allowed to flow through the bioreactor in step a) at a temperature of 47 to 52°C, at an overpressure of 0 to 5 bars, and with a contact time of 5 to 60 minutes. Particularly preferred process parameters are a temperature of 48°C, an overpressure of 0 to 2 bars, and a contact time of 20 minutes.

The carrier material used for the immobilization in the reactor consists preferably of a resin which is derived from cellulose or rayon and modified chemically in such a manner that it has anion exchanger properties. A particularly preferred embodiment includes microfibres or microparticles of diethyl-aminoethylene-substituted cellulose (DEAE-cellulose), the microparticles or microfibres being adhesively connected by agglomeration with polystyrene. Hydrophobic polymers other than polystyrene can be suitable for the agglomeration, as for example, melamine-formaldehyde resins and epoxy resins.

According to a further embodiment, the carrier material used for the immobilization of the lactic acid producing bacteria can consist of porous, sintered glass or ceramic materials.

Homofermentative bacteria are preferably used as lactic acid producing bacteria which mainly produce lactic acid and some flavour components which positively influence the aroma of the beer, and which produce the lactic acid in a constant and sufficient quantity. In this case, bacteria of the strains Lactobacillus amylovorus, plantarum and helveticus can be mentioned as examples.

The bacteria can be immobilized on the carrier by initially sterilizing the carrier packed in the bioreactor before the immobilization with hot, caustic soda solution, neutralising and rinsing with water and then pumping a separately cultured bacteria suspension through the bed carrier in order to bind the bacteria on the surface of the carrier.

The loading quantity of bacteria on the carrier lies at approximately 10⁸ to 10¹² bacteria cells/g dry carrier.

The quantity of loaded carriers in the bioreactor and the process parameters during the through-flow of the wort through the reactor are preferably adjusted such that the lactic acid concentration of the outflow from the bio-reactor is preferably 2 to 6 g/l, a value of 5 g/l being particularly favourable. The pH-value of the outflow in this case lies favourably in the region of 3.3 to 4.0, wherein a value of 3.8 is particularly advantageous.

The lactic acid producing bacteria applied on the carrier are preferably renewed after several months in that an aqueous caustic soda solution (2 wt.%) at a temperature of 60 to 80 °C is allowed to flow for a few hours through the reactor, and subsequently sterilising, neutralising, washing and treating this with a separately produced bacteria suspension as described above is effected.

As a dying off of the mentioned bacteria can ensue with a very high loading of the carrier with the lactic acid producing bacteria and, therefore, with a high concentration of lactic acid produced in the reactor, it is useful not to select too high a concentration of the bacteria in the reactor, and to instead effect a post-fermentation in accordance with step b) of the inventive process. In this case, the wort is transferred into a post-treatment container after treatment in the bio-reactor. Simultaneously with the wort, small quantities of bacteria in the reactor absorbed on the surfaces of the carrier are transferred with the outflow into the post-treatment container.

These bacteria effect a post-fermentation in the container, i.e. the lactic acid concentration of the wort increases in the post-treatment container and the pH-value drops further.

According to a preferred embodiment of step b), the residing time in the post-treatment container is set such that the concentration of the lactic acid amounts to 9 to 15 g/l, and in particular preferably 10 g/l. In this case, the pH-value is favourably adjusted to a range of 2.8 to 3.2, the optimum pH-value being <3.

In step c) of the inventive process, the acidified wort removed from the post-treatment container is mixed with non-acidified wort. The mixing ratio is preferably selected in such a way that the resulting pH-value lies in the range of 4.0 to 4.5, and more preferably 4.2, in the case where the wort is treated in step d) in a bioreactor with immobilized yeast. When the wort is treated with non-immobilized yeast according to step d), the preferred pH-value after the mixing in step c) lies within 5.0 to 5.5.

The wort to be adapted to a specific pH value and to be mixed in in step c) is preferably pretreated by removing insoluble components, boiling and/or stripping (with nitrogen, carbon dioxide or steam bubbles) and/or clarification as indicated previously for the wort to be acidified by immobilised lactic acid producing bacteria.

According to step d) of the inventive process, the wort adjusted to a specified pH-value is then preferably cooled to a temperature of 0°C to 2°C, filtered and subsequently treated with yeast. Preferably, the treatment with yeast ensues in a bioreactor with immobilized yeast. In a particularly favourable embodiment, the carrier for the yeast in this case is of the same type as in the immobilization of the lactic acid producing bacteria, i.e. a continuously porous matrix or dimpled or reticular, porous particles, the matrix or the particles having a structure which consists of a loosely associated plurality of microparticles or microfibres which chemically, adhesively or mechanically interconnect at least at some contact points between the individual microparticles or microfibres, the microparticles or microfibres being formed of a material, preferably a resin, which has anion exchanger properties. Preferably, the carrier is formed of a resin which is derived from cellulose or rayon and chemically modified in order to have anion exchanger properties. A most particularly preferred embodiment includes microfibres or microparticles of diethylaminoethylene-substituted cellulose (DEAE-cellulose) which are bonded or agglomerated with one another by polystyrene.

A further embodiment contains as carrier for yeast porous, sintered glass or ceramic materials.

According to a particularly preferred embodiment of process step d), the bioreactor can include several columns, advantageously placed under pressure and/or connected in parallel.

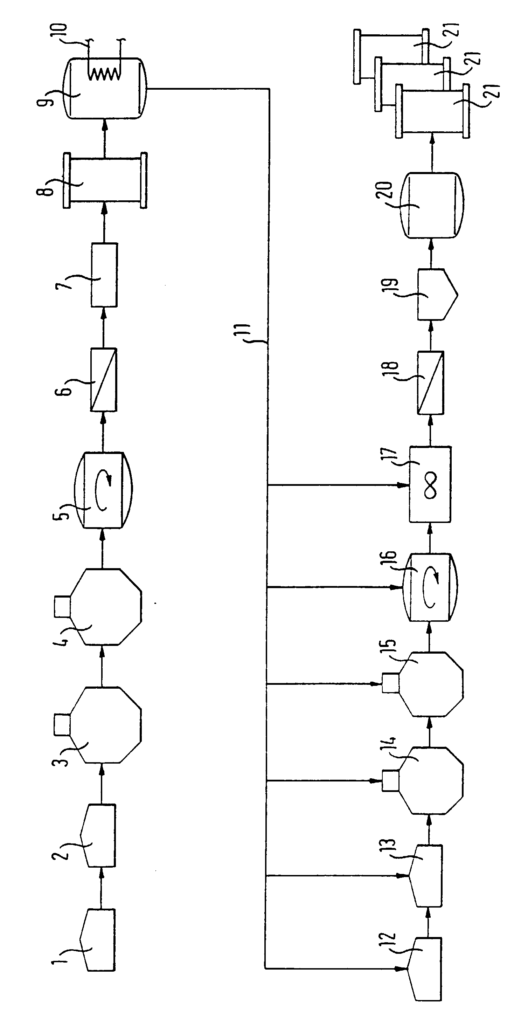

The second aspect of the above-mentioned object is solved by an apparatus for the production of non-alcoholic beer, in particular for the acidification of wort by means of lactic acid producing bacteria, which is described in more detail in the enclosed figure.

Figure: Schematic flow diagram of an apparatus for the production of non-alcoholic beer.

The apparatus includes a container for the manufacture of mash (1); a container (2) for removing insoluble components; a boiling container (3) and/or a stripping device (4) and/or a whirlpool (5) for clarification; heat exchange equipment (6); a device (7) for introducing CO₂ into the wort; a bioreactor (8) packed with a loaded carrier of the above-mentioned type for the acidification; a post-treatment container (9) and a temperature control device (10) for the temperature in the post-treatment container (9); means (11) for introducing the acidified wort from the container (9) into one or more of the devices (12) to (17) explained below; a mash container (12); a container (13) for removing insoluble components; a boiling container (14) and/or a stripping device (15) and/or a whirlpool for clarification (16); a mixer (17); a cooling device (18) for the mixed wort; a filtration unit (19); a holding tank (20); and a bioreactor with immobilized or non-immobilized yeast (21).

According to a preferred embodiment, the bioreactor (21) consists of several columns, preferably connected in parallel and/or placed under pressure.

The above described process for the production of non-alcoholic beer according to which lactic acid for acidifying the wort is continuously produced by means of immobilized lactic acid producing bacteria includes the advantage that, on account of the binding of the bacteria to the surface of the carrier, high and stable cell concentrations can be achieved so that the lactic acid can be produced in a sufficiently high quantity in a short period of time under controlled conditions. The continuous process makes possible short residence times of the worts in the reactor and also results in smaller dimensions of the reactor in comparison to batch operations. The treated product is contaminated only with small quantities of biomass and does not require any work-intensive separating operations. The carrier especially applied in the claimed process can be repeatedly used and has a long lifetime. Finally, no unnecessary pressure drops are generated in the reactor due to the substantially non-compressible carrier.

The bioreactor according to the invention includes a high capacity and a high flexibility with regard to the production of lactic acid. The bioreactor can be kept for several weeks under stand-by conditions and can be started up very easily. The processes in the bioreactor can be performed completely automatically and in a closed system, so that a good biological condition is obtained with no contamination by foreign bacteria or yeast cells. The inventive bioreactor enables a compact installation and the saving of energy and costs.

The present invention is described in more detail with respect to the following examples.

### Example 1: Production of a carrier

25 parts cellulose were mixed with 25 parts aluminum oxide and the mixture was compounded with 50 parts polystyrene for approximately 10 minutes on a two-roll mill heated to 180 to 200°C. After cooling, the composite body was ground and pulverized to a particle size of 0.420 to 0.149 mm.

220 g of the pulverized composite body were reduced to a slurry in 616 ml water containing 176 g Na₂SO₄ and 26.4 g NaOH. The slurry was heated to 40°C and then 57.2 g of a 5% aqueous solution of diethyl aminoethyl chloride x hydrochloride (DEC) were added to the slurry with mixing at a rate of 0.7 ml/min in a period of 1 hour. Subsequently, 26.4 g NaOH dissolved in 26 ml water was added to the slurry and then a further 27.25 g of DEC-solution at a rate of 0.7 ml/min.

The temperature of the slurry was raised to 60°C and this temperature was maintained for 15 minutes. A water quantity which was approximately the same as the volume of the slurry was added and the composite body was obtained on a sieve with a low mesh size of 0.250 mm. The composite body was washed on the sieve with water and then again reduced to a slurry in a quantity of water which corresponds to the previously added quantity. This slurry was adjusted to a pH-value of approximately 7 with HCl, dewatered on filter paper and dried.

### Example 2: Immobilization of the bacteria on the carrier

10 g of granular DEAE-cellulose of example 1 were reduced to a slurry in distilled water and soaked for 5 hours with occasional stirring. The hydrated carrier was then decanted with distilled water and transferred to a glass column with an inner diameter of 15 mm, in which it formed a bed with a height of 145 mm. Lactic acid producing bacteria of the type Lactobacillus amylovorus were cultured in wort with no hops or hops extract for 48 hours at 46°C. 50 ml of the cell suspension were pumped through the carrier bed at a flow velocity of 25 ml/h and, subsequently, a further 50 ml of distilled water were pumped through. The outflow of the column was collected until it was clear, the total volume amounting to 75 ml.

### Example 3: Treatment of wort with immobilized lactic acid producing bacteria

Wort was fed through the bioreactor of the type of example 2 including a diameter of 90 cm and a bed-depth of 40 cm at a temperature of 48°C, an overpressure of 0.5 bar and a contact time of 20 minutes. The sugar content of the fed wort amounted to 15.1 % according to the refractrometer scale of Brix, and the pH-value amounted to 5.50. The pH-value of the column outflow was 3.85 and the concentration of lactic acid was 6 g/l.

## Claims

1. Process for the production of non-alcoholic beer, wherein the pH value of the wort is adjusted with lactic acid producing bacteria,
**characterized** in that
a) a wort which is free or substantially free from hops and hops extract is allowed to flow through a bioreactor, which contains immobilized, lactic acid producing bacteria on the surfaces of a substantially non-compressible carrier, which is composed of a continuous, porous matrix or of dimpled or reticular, porous particles, wherein the matrix or the particles have a structure which consists of a loosely associated plurality of microparticles or microfibers, which are interconnected chemically, adhesively or mechanically on at least some contact points between the individual microparticles or microfibers, said microparticles or microfibers consisting of a material, preferably a resin, which has anion exchanger properties;
b) the acidified wort which is obtained from the bioreactor is left in a post-treatment container;
c) the thus treated acidified wort from the post-treatment container is mixed with non-acidified wort which is to be adjusted to a predetermined pH value; and
d) the mixture is then further processed in a manner known per se to make non-alcoholic beer.

2. A process as in claim 1, **characterized** in that the wort being used in step a) is pretreated by removing insoluble components, and preferably also by boiling and/or stripping with nitrogen, carbon dioxide or steam bubbles and/or clarifying.

3. A process as in claim 1 or 2, **characterized** in that the wort is adapted to a temperature of 47-52°C before it is transferred to the bioreactor.

4. A process as in claim 3, **characterized** in that the wort is contacted with carbon dioxide after adapting the temperature and before introduction in the bioreactor.

5. A process as in one or more of the preceding claims, **characterized** in that in step a) the wort is caused to flow through the reactor at a temperature from 47 to 52°C, at an overpressure from 0 to 5 bars and with a contact time from 5 to 60 minutes.

6. A process as in one or more of the preceding claims, **characterized** in that the carrier is a resin which is derived from cellulose or rayon and is chemically modified to give the resin anion exchanger properties.

7. A process as in claim 6, **characterized** in that the carrier consists of microfibers or microparticles of diethylaminoethylene-substituted cellulose (DEAE cellulose) which are agglomerated to each other by polystyrene.

8. A process as in one or more of the preceding claims, **characterized** in that the bacteria producing the lactic acid are homofermentatively fermenting bacteria.

9. A process as in one or more of the preceding claims, **characterized** in that the bacteria are immobilized on the carrier by initially sterilizing the carrier packed in the bioreactor with hot, caustic soda solution, neutralising and rinsing with water and then allowing a separately cultured bacteria suspension to flow through the reactor bed.

10. A process as in one or more of the preceding claims, **characterized** in that the loading capacity of the carrier is 10⁸ to 10¹² bacteria cells/g dry carrier.

11. A process as in one or more of the preceding claims, **characterized** in that the lactic acid concentration in the outflow of the bioreactor is from 2 to 6 g/l.

12. A process as in one or more of the preceding claims, **characterized** in that the pH value of the outflow of the bioreactor is in the range from 3.3 to 4.0.

13. A process as in one or more of the preceding claims, **characterized** in that the bacteria are regenerated after several months by rinsing the bioreactor with a caustic soda solution (2 wt.%) at 60 to 80°C for a few hours and by subsequent sterilizing, neutralizing, rinsing and loading of the carrier with a bacteria suspension.

14. A process as in one or more of the preceding claims, **characterized** in that the residence time in the post-treatment container is adjusted in step b), so that the lactic acid concentration is from 9 to 15 g/l and the pH value is in the range from 2.8 to 3.2.

15. A process as in one or more of the preceding claims, **characterized** in that the acidified wort derived from the post-treatment container is mixed with non-acidified wort to be adjusted to a predetermined pH value in step c) in a mix ratio, such that the pH value of the mixture is in the range from 4.0 to 4.5 and that the mixed wort in step d) is treated in a bioreactor with immobilized yeast.

16. A process as in one or more of the preceding claims 1 to 14, **characterized** in that the acidified wort derived from the post-treatment container is mixed with non-acidified wort to be adjusted to a predetermined pH value in step c) in a mix ratio, such that the pH value of the mixture is in the range from 5.0 to 5.5 and that the mixed wort in step d) is treated in a bioreactor with non-immobilized yeast.

17. A process as in one or more of the preceding claims, **characterized** in that the non-acidified wort to be set to a predetermined pH value is freed of insoluble components, boiled and/or stripped with nitrogen, carbon dioxide or steam bubbles and/or clarified before mixing with the acidified wort.

18. A process as in one or more of the preceding claims, **characterized** in that after the mixing performed in step c), the wort is cooled to a temperature of 0 to 2°C, filtered and treated with yeast.

19. A process as in one or more of the preceding claims 15, 17 and 18, **characterized** in that the yeast is immobilized on the surface of a substantially non-compressible carrier, which consists of a continuous porous matrix or of dimpled or reticular porous particles, wherein the matrix or the particles have a structure which consists of a loosely associated plurality of microparticles or microfibers, which are connected chemically, adhesively or mechanically at least on some contact points between the individual microparticles or microfibers, the microparticles or microfibers consisting of a material, preferably a resin, with anion exchanger properties.

20. A process as in claim 19, **characterized** in that the carrier is a resin which is derived from cellulose or rayon and is chemically modified to have anion exchanger properties.

21. A process as in claim 20, **characterized** in that the carrier consists of microfibers or microparticles of diethylaminoethylene-substituted cellulose (DEAE cellulose) which are agglomerated with polystyrene.

22. Apparatus for performing the process as in one of the claims 1 to 21, **characterized** in that it comprises:
a container for the production of mash (1);
a container (2) for removing insoluble components;
a boiling container (3) and/or stripping device (4) and/or a whirlpool (5) for clarification;
a heat exchanger (6);
a device (7) for introducing CO₂ into the wort;
a bioreactor (8) with lactic acid producing bacteria immobilized on the surfaces of a carrier as in claim 1;
a post-treatment container (9);
a temperature control apparatus (10) for adjusting the temperature in the post-treatment container (9);
means (11) for introducing the acidified wort from the post-treatment container (9) into one or more of the following devices (12) to (17);
a container for the production of mash (12);
a container (13) for removing insoluble components;
a boiling container and/or a stripping device (15) and/or a whirlpool (16) for clarification;
a mixer (17);
a cooling device (18) for the mixture of the acidified wort and the non-acidified wort;
a filtration unit (19);
a holding tank (20); and
a bioreactor (21) with immobilized or non-immobilized yeast.

23. Apparatus as in claim 22, **characterized** in that the bioreactor (21) comprises a plurality of columns, preferably under pressure and/or parallel to each other.

## Patentansprüche

1. Verfahren zur Herstellung von nicht-alkoholischem Bier, wobei der pH-Wert der Bierwürze mit Milchsäure produzierenden Bakterien eingestellt wird,
dadurch **gekennzeichnet,** daß
a) eine Bierwürze, die frei oder im wesentlichen frei ist von Hopfen und Hopfenextrakten, durch einen Bioreaktor geleitet wird, der immobilisierte, Milchsäure produzierende Bakterien auf der Oberfläche eines im wesentlichen nicht verdichtbaren Trägers enthält, der aus einer kontinuierlichen, porösen Matrix oder aus mit Vertiefungen versehenen oder netzförmigen porösen Partikeln aufgebaut ist, wobei die Matrix oder die Partikel eine Struktur aufweisen, die aus einer lose verbundenen Vielzahl von Mikropartikeln oder Mikrofasern besteht, die miteinander chemisch, durch Adhäsionskräfte oder mechanisch an zumindest einigen Kontaktpunkten zwischen den einzelnen Mikropartikeln oder Mikrofasern verbunden sind, wobei die Mikropartikel oder Mikrofasern aus einem Material, vorzugsweise einem Harz, bestehen, welches Anionenaustauschereigenschaften hat;
b) die angesäuerte Bierwürze, die aus dem Bioreaktor erhalten wird, in einem Nachbehandlungsbehälter stehen gelassen wird;
c) die so behandelte angesäuerte Bierwürze aus dem Nachbehandlungsbehälter mit nicht-angesäuerter Würze, die auf einen vorherbestimmten pH-Wert eingestellt worden ist, vermischt wird; und
d) die Mischung dann in einer an sich bekannten Art und Weise weiterverarbeitet wird, um nichtalkoholisches Bier herzustellen.

2. Verfahren gemäß Anspruch 1,
dadurch **gekennzeichnet,** daß
die in Schritt a) verwendete Bierwürze durch Entfernen der unlöslichen Komponenten vorbehandelt wird, und vorzugsweise zudem durch Kochen und/oder Strippen mit Stickstoff, Kohlendioxid oder Dampfblasen und/oder Klärung.

3. Verfahren gemäß Anspruch 1 oder 2,
dadurch **gekennzeichnet,** daß
die Bierwürze auf eine Temperatur von 47 bis 52°C vor der Zuführung zu dem Bioreaktor angepaßt wird.

4. Verfahren gemäß Anspruch 3,
dadurch **gekennzeichnet,** daß
die Bierwürze nach der Anpassung der Temperatur und vor der Zuführung in den Bioreaktor mit Kohlendioxid in Kontakt gebracht wird.

5. Verfahren gemäß einem oder mehrerer der vorhergehenden Ansprüche,
dadurch **gekennzeichnet,** daß
in Schritt a) die Bierwürze durch den Reaktor bei einer Temperatur von 47 bis 52°C bei einem Überdruck von 0 bis 5 Bar und bei einer Kontaktzeit von 5 bis 60 min durchgeleitet wird.

6. Verfahren gemäß einem oder mehrerer der vorhergehenden Ansprüche,
dadurch **gekennzeichnet,** daß
der Träger ein Harz ist, welches sich von Cellulose oder Kunstseide ableitet und chemisch zum Erhalt der Anionenaustauschereigenschaften des Harzes modifiziert ist.

7. Verfahren gemäß Anspruch 6,
dadurch **gekennzeichnet,** daß
der Träger aus Mikrofasern oder Mikropartikeln aus Diethylaminoethylen-substituierter Cellulose (DEAE-Cellulose) besteht, die miteinander durch Polystyrol agglomeriert sind.

8. Verfahren gemäß einem oder mehreren der vorhergehenden Ansprüche,
dadurch **gekennzeichnet,** daß
die Milchsäure produzierenden Bakterien homofermentativ fermentierende Bakterien sind.

9. Verfahren gemäß einem oder mehreren der vorhergehenden Ansprüche,
dadurch **gekennzeichnet,** daß
die Bakterien auf dem Träger durch anfängliches Sterilisieren des in dem Bioreaktor gepackten Trägers mit heißer, ätzender Natriumcarbonat-Lösung, Neutralisieren und Waschen mit Wasser und anschließendes Durchleiten einer getrennt kultivierten Bakteriensuspension durch das Reaktorbett immobilisiert werden.

10. Verfahren gemäß einem oder mehreren der vorhergehenden Ansprüche,
dadurch **gekennzeichnet,** daß
die Ladekapazität der Trägers 10⁸ bis 10¹² Bakterienzellen/g trockenem Träger beträgt.

11. Verfahren gemäß einem oder mehreren der vorhergehenden Ansprüche,
dadurch **gekennzeichnet,** daß
die Milchsäurekonzentration in dem Ausfluß des Bioreaktors 2 bis 6 g/l beträgt.

12. Verfahren gemäß einem oder mehreren der vorhergehenden Ansprüche,
dadurch **gekennzeichnet,** daß
der pH-Wert des Ausflusses des Bioreaktors in dem Bereich von 3,3 bis 4,0 liegt.

13. Verfahren gemäß einem oder mehreren der vorhergehenden Ansprüche,
dadurch **gekennzeichnet,** daß
die Bakterien nach mehreren Monaten durch einige Stunden andauerndes Spülen des Bioreaktors mit einer ätzenden Natriumcarbonat-Lösung (2 Gew.-%) bei 60 bis 80°C und anschließendem Sterilisieren, Neutralisieren, Spülen und Beladen des Trägers mit einer Bakteriensuspension regeneriert wird.

14. Verfahren gemäß einem oder mehreren der vorhergehenden Ansprüche,
dadurch **gekennzeichnet,** daß
die Verweilzeit in dem Nachbehandlungsbehälter in Schritt b) so eingestellt wird, daß die Milchsäurekonzentration 9 bis 15 g/l beträgt und der pH-Wert in dem Bereich von 2,8 bis 3,2 liegt.

15. Verfahren gemäß einem oder mehreren der vorhergehenden Ansprüche,
dadurch **gekennzeichnet,** daß
die angesäuerte Bierwürze aus dem Nachbehandlungsbehälter mit auf einen vorherbestimmten pH-Wert einzustellender, nicht-angesäuerter Bierwürze in Schritt c) in einem Mischungsverhältnis vermischt wird, so daß der pH-Wert der Mischung in dem Bereich von 4,0 bis 4,5 liegt und daß die gemischte Bierwürze in Schritt d) in einem Bioreaktor mit immobilisierter Hefe behandelt wird.

16. Verfahren gemäß einem oder mehreren der vorhergehenden Ansprüche 1 bis 14,
dadurch **gekennzeichnet,** daß
die angesäuerte Bierwürze aus dem Nachbehandlungsbehälter mit auf einen vorherbestimmten pH-Wert einzustellende nicht-angesäuerte Bierwürze in Schritt c) in einem Mischungsverhältnis vermischt wird, so daß der pH-Wert der Mischung in dem Bereich von 5,0 bis 5,5 liegt und daß die gemischte Bierwürze in Schritt d) in einen Bioreaktor mit nicht-immobilisierter Hefe behandelt wird.

17. Verfahren gemäß einem oder mehreren der vorhergehenden Ansprüche,
dadurch **gekennzeichnet,** daß
die auf einen vorherbestimmten pH-Wert einzustellende, nicht-angesäuerte Bierwürze vor dem Mischen mit der angesäuerten Bierwürze von unlöslichen Komponenten bereinigt, gekocht und/oder mit Stickstoff, Kohlendioxid oder Dampfblasen gestrippt und/oder geklärt wird.

18. Verfahren gemäß einem oder mehreren der vorhergehenden Ansprüche,
dadurch **gekennzeichnet,** daß
nach dem Mischen in Schritt c) die Bierwürze auf eine Temperatur von 0 bis 2°C gekühlt, filtriert und mit Hefe behandelt wird.

19. Verfahren gemäß einem oder mehreren der vorhergehenden Ansprüche 15, 17 und 18,
dadurch **gekennzeichnet,** daß
die Hefe auf einer Oberfläche eines im wesentlichen nicht-verdichtbaren Trägers immobilisiert ist, der aus einer kontinuierlichen, porösen Matrix oder aus mit Vertiefungen versehenen oder netzförmigen porösen Partikeln aufgebaut ist, wobei die Matrix oder die Partikel eine Struktur aufweisen, die aus einer lose verbundenen Vielzahl von Mikropartikeln oder Mikrofasern besteht, die miteinander chemisch, durch Adhäsionskräfte oder mechanisch an zumindest einigen Kontaktpunkten zwischen den einzelnen Mikropartikeln oder Mikrofasern verbunden sind, wobei die Mikropartikel oder Mikrofasern aus einem Material, vorzugsweise einem Harz, bestehen, welches Anionenaustauschereigenschaften hat.

20. Verfahren gemäß Anspruch 19,
dadurch **gekennzeichnet,** daß
der Träger ein Harz ist, welches sich aus Cellulose oder Kunstseide ableitet und chemisch zum Erhalt von Anionenaustauschereigenschaften modifiziert ist.

21. Verfahren gemäß Anspruch 20,
dadurch **gekennzeichnet,** daß
der Träger aus Mikrofasern oder Mikropartikeln von Diethylaminoethylen-substituierter Cellulose (DEAE-Cellulose) besteht, die mit Polystyrol agglomeriert sind.

22. Vorrichtung zur Durchführung des Verfahrens gemäß einem der Ansprüche 1 bis 21,
dadurch **gekennzeichnet,** daß sie umfaßt:
einen Behälter zur Herstellung von Maische (1);
einen Behälter (2) zur Entfernung der unlöslichen Komponenten;
einen Kochbehälter (3) und/oder eine Vorrichtung zum Strippen (4) und/oder ein Wirbelbecken (5) zur Klärung;
einen Wärmeaustauscher (6);
eine Vorrichtung (7) zur Einleitung von CO₂ in die Bierwürze;
einen Bioreaktor (8) mit Milchsäure produzierenden Bakterien, die an den Oberflächen eines Trägers wie in Anspruch 1 immobilisiert sind;
einen Nachbehandlungsbehälter (9);
eine Temperaturkontrollvorrichtung (10) zur Einstellung der Temperatur in dem Nachbehandlungsbehälter (9);
ein Mittel (11) zum Einleiten der angesäuerten Bierwürze aus dem Nachbehandlungsbehälter (9) in eine oder mehrere der folgenden Vorrichtungen (12) bis (17);
einen Behälter für die Produktion von Maische (12);
einen Behälter (13) zur Entfernung unlöslicher Komponenten;
einen Kochbehälter und/oder eine Vorrichtung zum Strippen (15) und/oder eine Wirbelbecken (16) zur Klärung;
einen Mischer (17);
eine Kühlvorrichtung (18) für die Mischung aus der angesäuerten Bierwürze und der nicht-angesäuerten Bierwürze;
eine Filtriereinheit (19);
einen Aufbewahrungstank (20); und
einen Bioreaktor (21) mit immobilisierter oder nicht-immobilisierter Hefe.

23. Vorrichtung gemäß Anspruch 22,
dadurch **gekennzeichnet,** daß
der Bioreaktor (21) eine Vielzahl von Säulen, vorzugsweise unter Druck und/oder parallel zueinander, umfaßt.

## Revendications

1. Procédé pour la fabrication d'une bière sans alcool, dans lequel la valeur du pH du moût est ajustée avec une bactérie produisant de l'acide lactique,
**caractérisé** en ce que :
a) on laisse un moût qui est exempt ou sensiblement exempt de houblon et d'extrait de houblon traverser un bioréacteur, qui contient des bactéries produisant de l'acide lactique, immobilisées, sur les surfaces d'un support sensiblement non-compressible, qui est constitué d'une matrice continue, poreuse, ou de particules poreuses, à fossettes ou réticulaires, où la matrice ou les particules ont une structure qui est constituée d'une pluralité associée lâchement de microparticules ou de microfibres, qui sont interconnectées chimiquement, par adhésif ou mécaniquement sur au moins certains points de contact entre les microparticules ou les microfibres individuelles, lesdites microparticules ou microfibres étant constituées d'un matériau, de préférence une résine, qui présente des propriétés d'échange d'anions ;
b) le moût acidifié qui est obtenu dans le bioréacteur est laissé dans un conteneur pour traitement ultérieur ;
c) le moût acidifié ainsi traité qui provient du conteneur de post-traitement est mélangé avec du moût non-acidifié, qui doit être ajusté à une valeur prédéterminée du pH ; et
d) le mélange est alors traité en outre d'une manière connue en soi pour fabriquer une bière sans alcool.

2. Procédé selon la revendication 1, **caractérisé** en ce que le moût utilisé dans l'étape a) est pré-traité par enlèvement des composants insolubles, et de préférence aussi par ébullition et/ou dépouillement avec de l'azote, du dioxyde de carbone ou des bulles de vapeur et/ou par clarification.

3. Procédé selon la revendication 1 ou 2, **caractérisé** en ce que le moût est adapté à une température de 47-52°C avant d'être transféré au bioréacteur.

4. Procédé selon la revendication 3, **caractérisé** en ce que le moût est mis en contact avec du dioxyde de carbone après adaptation à la température et avant introduction dans le bioréacteur.

5. Procédé selon l'une ou plusieurs des revendications précédentes, **caractérisé** en ce que dans l'étape a) le moût est amené à traverser le réacteur à une température comprise entre 47 et 52°C, à une surpression de 0 à 5 bars et avec un temps de contact de 5 à 60 minutes.

6. Procédé selon l'une ou plusieurs des revendications précédentes, **caractérisé** en ce que le support est une résine qui est dérivée de la cellulose ou de la rayonne et est modifiée chimiquement pour conférer à la résine des propriétés d'échange d'anions.

7. Procédé selon la revendication 6, **caractérisé** en ce que le support est constitué de microfibres ou de microparticules de cellulose substituée par du diéthylaminoéthylène (cellulose DEAE) qui sont agglomérées les unes aux autres par du polystyrène.

8. Procédé selon l'une ou plusieurs des revendications précédentes, **caractérisé** en ce que les bactéries produisant l'acide lactique sont des bactéries fermentant de manière homofermentable.

9. Procédé selon l'une ou plusieurs des revendications précédentes, **caractérisé** en ce que les bactéries sont immobilisées sur le support en stérilisant initialement le support garni dans le bioréacteur avec une solution de soude caustique chaude, en neutralisant et en rinçant à l'eau et en laissant alors une suspension de bactéries cultivées séparément traverser le lit du réacteur.

10. Procédé selon l'une ou plusieurs des revendications précédentes, **caractérisé** en ce que la capacité de chargement du support est 10⁸ à 10¹² cellules de bactérie /g du support sec.

11. Procédé selon l'une ou plusieurs des revendications précédentes, **caractérisé** en ce que la concentration de l'acide lactique dans la décharge du bioréacteur est de 2 à 6 g/l.

12. Procédé selon l'une ou plusieurs des revendications précédentes, **caractérisé** en ce que la valeur du pH de la décharge du bioréacteur est dans la plage de 3,3 à 4,0.

13. Procédé selon l'une ou plusieurs des revendications précédentes, **caractérisé** en ce que les bactéries sont régénérées au bout de plusieurs mois en rinçant le bioréacteur avec une solution de soude caustique (2 % en poids) à 60-80°C pendant quelques heures et ensuite en stérilisant, neutralisant, rinçant et chargeant le support avec une suspension de bactéries.

14. Procédé selon l'une ou plusieurs des revendications précédentes, **caractérisé** en ce que le temps de séjour dans le conteneur du traitement ultérieur est ajusté dans l'étape b), de sorte que la concentration de l'acide lactique est de 9 à 15 g/l et la valeur du pH est dans la plage de 2,8 à 3,2.

15. Procédé selon l'une ou plusieurs des revendications précédentes, **caractérisé** en ce que le moût acidifié qui est dérivé du conteneur de traitement ultérieur est mélangé avec du moût non-acidifié devant être ajusté à une valeur prédéterminée du pH dans l'étape c) dans un rapport de mélange tel que la valeur du pH du mélange est dans la plage de 4,0 à 4,5 et que le moût mélangé dans l'étape d) est traité dans un bioréacteur avec de la levure immobilisée.

16. Procédé selon l'une ou plusieurs des revendications précédentes 1 à 14, **caractérisé** en ce que le moût acidifié dérivé du conteneur de traitement ultérieur est mélangé avec du moût non-acidifié devant être ajusté à une valeur prédéterminée du pH dans l'étape c) dans un rapport de mélange tel que la valeur du pH du mélange est dans la plage de 5,0 à 5,5 et que le moût mélangé dans l'étape d) est traité dans un bioréacteur avec de la levure non immobilisée.

17. Procédé selon l'une ou plusieurs des revendications précédentes, **caractérisé** en ce que le moût non acidifié devant être réglé à une valeur prédéterminée du pH est débarrassé des composants insolubles, bouilli et/ou dépouillé avec de l'azote, du dioxyde de carbone ou des bulles de vapeur et/ou clarifié avant mélange avec le moût acidifié.

18. Procédé selon l'une ou plusieurs des revendications précédentes, **caractérisé** en ce que, après le mélange exécuté dans l'étape c), le moût est refroidi à une température de 0 à 2°C, filtré et traité avec de la levure.

19. Procédé selon l'une ou plusieurs des revendications 15, 17 et 18 précédentes, **caractérisé** en ce que la levure est immobilisée sur la surface d'un support pratiquement non compressible, qui est constitué d'une matrice continue, poreuse, ou de particules poreuses à fossettes ou réticulaires, où la matrice ou les particules ont une structure qui est constituée d'une pluralité associée lâchement de microparticules ou de microfibres, qui sont reliées chimiquement, par adhésif ou mécaniquement au moins sur certains points de contact entre les microparticules ou les microfibres individuelles, les microparticules ou les microfibres étant constituées d'un matériau, de préférence d'une résine, présentant des propriétés d'échange d'anions.

20. Procédé selon la revendication 19, **caractérisé** en ce que le support est une résine qui est dérivée de la cellulose ou de la rayonne et est modifiée chimiquement pour présenter des propriétés d'échange d'anions.

21. Procédé selon la revendication 20, **caractérisé** en ce que le support est constitué de microfibres ou de microparticules de cellulose substituée par du diéthylaminoéthylène (cellulose DEAE) qui sont agglomérées avec du polystyrène.

22. Appareil pour exécuter le procédé selon l'une des revendications 1 à 21, **caractérisé** en ce qu'il comprend :
un conteneur pour la fabrication de fardeau (1) ;
un conteneur (2) pour enlever les composants insolubles ;
un conteneur d'ébullition (3) et/ou un dispositif de dépouillement (4) et/ou un tourbillon (5) pour clarification ;
un échangeur de chaleur (6) ;
un dispositif (7) pour introduire du CO₂ dans le moût ;
un bioréacteur (8) avec des bactéries produisant de l'acide lactique immobilisées sur les surfaces d'un support selon la revendication 1 ;
un conteneur pour traitement ultérieur (9) ;
un appareil de commande de la température (10) pour ajuster la température régnant dans le conteneur de traitement ultérieur (9) ;
un moyen (11) pour introduire le moût acidifié et le faire passer du conteneur de traitement ultérieur (9) à un ou plusieurs des dispositifs (12 à 17) suivants ;
un conteneur pour la production de moût (12) ;
un conteneur (13) pour enlever les composants insolubles ;
un conteneur d'ébullition et/ou un dispositif de dépouillement (15) et/ou un tourbillon (16) pour clarification ;
un mélangeur (17) ;
un dispositif de refroidissement (18) pour le mélange du moût acidifié et du moût non acidifié ;
un réservoir de maintien (20) ; et
un bioréacteur (21) avec de la levure immobilisée ou non immobilisée.

23. Appareil selon la revendication 22, **caractérisé** en ce que le bioréacteur (21) comprend une pluralité de colonnes, de préférence sous pression et/ou parallèles les unes aux autres.
